# EUROPÄISCHE PATENTANMELDUNG

(11) **EP 0 856 720 A1**
(43) Veröffentlichungstag der Anmeldung: **05.08.1998**
(21) Anmeldenummer: 97122889.5
(22) Anmeldetag: 24.12.1997
(51) Int. Cl.: G01D 5/14, B62D 15/02

(54) **Lenkwinkelsensor**

(30) Priorität: 03.02.1997 DE 19703903
(71) Anmelder: ROBERT BOSCH GMBH, 70442 Stuttgart (DE)
(72) Erfinder: Zabler, Erich, Dr., 76297 Stutensee (DE); Dukart, Anton, 76744 Woerth (DE)

(57) **Zusammenfassung**

Die Erfindung betrifft einen in das Lenkgetriebe integrierbaren Lenkwinkelsensor zur Detektierung des Drehwinkels oder einer Drehwinkeländerungen des Lenkrades eines Kraftfahrzeugs, bei dem mittels eines elektromechanischen Bauteils ein vom Drehwinkel oder einer Drehwinkeländerung abhängiges elektrisches Signal erzeugbar ist. Ein berührungsfreier Lenkwinkelsensor besteht aus einem, am Ende einer Lenkspindel (2) angebrachten Dauermagneten (10), dessen Magnetisierungsachse senkrecht zur Achse der Lenkspindel (2) liegt. Im Bereich des Dauermagneten (10) befindet sich ein feststehender magnetfeldempfindlicher Sensor (12), vorzugsweise aus Hallelementen (13,14) in diskreter oder integrierter Form.

## Beschreibung

### Stand der Technik

Die Erfindung betrifft einen Lenkwinkelsensor zur Detektierung des Drehwinkels oder einer Drehwinkeländerungen am Lenkrad eines Kraftfahrzeugs nach dem Oberbegriff des Hauptanspruchs.

Für eine Vielzahl von, in der Regel elektronischen, Steuer- und Regelsystemen in einem Kraftfahrzeug ist eine Bestimmung des Drehwinkels des Lenkrades von großer Bedeutung. Beispielsweise für Regelungssysteme für das Fahrwerk bzw. die Fahrdynamik sollte ein Istsignal über die Lenkradstellung oder eine Drehwinkeländerung des Lenkrades zur Verfügung stehen. Ein solches Istsignal ist auch für elektronisch gesteuerte Servolenksysteme von Bedeutung.

Bei einem bekannten Lenkwinkelsensor der eingangs angegebenen Art ist beispielsweise ein Rotor in der Nähe des Lenkrades mit der Lenkspindel verbunden, wobei der Stator dieses Sensors am Chassis des Kraftfahrzeugs fest angebracht ist. Bei diesem bekannten Sensor treten im Betrieb erhebliche Toleranzen in der Lage zwischen dem Rotor und dem Stator auf, so dass zur Erhöhung der Genauigkeit zusätzliche Kompensationsmittel, zum Beispiel eine elastische Anbindung des Rotors an die Lenkspindel, eingebaut werden müssen. Hierdurch entstehen zusätzliche Kosten und es wird wertvoller Bauraum benötigt.

Weiterhin werden bei bekannten Systemen Lenkwinkelsensoren mit Drehpotentiometern aufgebaut, die über eine Veränderung der Schleiferstellung beim Drehpotentiometer ein elektrisches Signal durch eine auswertbare Widerstandsänderung erzeugen. Hierbei besteht die Gefahr eines Verschleißes der Widerstandsbahn und eine Störanfälligkeit des Schleifkontakts. Nach langem Betrieb kann sich hier auch eine zu Signalverfälschungen führende Erhöhung des Übergangswiderstandes zwischen dem Schleifkontakt und der Widerstandsbahn ergebenen. Ebenfalls besteht die prinzipielle Möglichkeit eines Abhebens des Schleifkontakts bei schneller Drehung des Lenkrades.

### Vorteile der Erfindung

Der Lenkwinkelsensor zur Detektierung des Drehwinkels oder einer Drehwinkeländerungen am Lenkrades eines Kraftfahrzeugs nach der eingangs beschriebenen Art ist in der erfindungsgemäßen Weiterbildung mit den kennzeichnenden Merkmalen des Anspruchs 1 dadurch vorteilhaft, dass ein verschleißfreier Sensor geschaffen ist, der berührungslos den Drehwinkel des Lenkrades detektiert. Außerdem ist der erfindungsgemäße Lenkwinkelsensor einfach an die vorhandenen Baugruppen der Lenkanlage anbaubar und damit kostengünstiger und zuverlässiger als die bekannten Lösungen. Er kann in vorteilhafter Weise mit dem Gehäuse des Lenkgetriebes vereinigt werden, wobei er bei günstigen Betriebsbedingungen (Schutz vor Ölen, Fetten etc.) direkt beim Dauermagneten oder auch in einem Sensorgehäuse sitzen kann.

Auch für die Erfassung von Mehrfachumdrehungen eines Lenkrades kann hier ohne zusätzliche Detektionsmittel, wie zum Beispiel ein Untersetzungsgetriebe mit einem zusätzlichen Winkelabgriff, ein eindeutiges Signal erzeugt werden.

Der in einem der Unteransprüche angegebene Anbau eines Sensorgehäuses am Gehäuse eines Lenkgetriebemoduls bietet ohne viel Aufwand eine hochgenaue, nahezu toleranzfreie Lagerung von drehendem und feststehendem Teil des Winkelsensors. Eine Eigenlagerung des Sensors ist somit nicht erforderlich; ebenso entfallen Mittel zum Ausgleich der Lagerungs- und Montagetoleranzen.

Eine elektronische Auswertung des Sensorausgangssignals ist auf einfache Weise möglich, da entweder ein Aufbau des Lenkwinkelsensors mit diskreten elektronischen Bauteilen oder als integrierte Schaltung in vorteilhafter Weise ein digitales oder zumindest quasidigitales bzw. analoges Ausgangssignal (z.B. pulsdauermoduliert) mit sehr hoher Übertragungssicherheit liefert. In einer integrierten Schaltung können die Hallelemente sog. Vertical Hall Devices oder auch Magnetotransistoren sein, die im gleichen Chip mit der Auswerteelektronik untergebracht werden können.

Eine bevorzugte Ausführungsform des Lenkwinkelsensors ist ein Aufbau als Hallsensor, wie er für sich gesehen in der DE 44 41 504 A1 beschrieben ist. Der Sensor besteht im wesentlichen aus zwei orthogonal zueinander ausgerichteten Hallelementen, mit denen sowohl die x- als auch die y-Komponente des mit dem Lenkradwinkel sich drehenden Magnetfelds erfasst wird. Hierbei liegen die genannten, vom Sensor erfassten Feldkomponenten in einer Ebene senkrecht zur Drehachse der Lenkspindel. Dieses Meßprinzip ermöglicht eine genaue Winkelmessung über einen ganzen Vollwinkel von 360° und auch Mehrfachumdrehungen können auf einfache Weise detektiert und in der elektronischen Auswerteeinheit als solche erfasst werden .

### Zeichnung

Ein Ausführungsbeispiel eines erfindungsgemäßen Lenkwinkelsensors zur Detektierung des Drehwinkels oder einer Drehwinkeländerungen am Lenkrad eines Kraftfahrzeugs wird anhand der Zeichnung erläutert. Es zeigen:
Figur 1 eine schematische Ansicht eines Lenkgetriebes für ein Kraftfahrzeug;
Figur 2 einen Schnitt durch eine Lagerung für die Lenkspindel des Lenkgetriebes mit einem Hallsensor als Lenkwinkelsensor;
Figur 3 eine Ansicht einer prinzipiellen Anordnung von Dauermagnet und Hallelementen des Lenkwinkelsensors mit diskreten Bauelementen;
Figur 4 eine Bauform der Hallelemente in einer integrierten Schaltung und
Figur 5 Diagramme der Ausgangssignale der Hallelemente nach den Figuren 3 und 4.

### Beschreibung des Ausführungsbeispiels

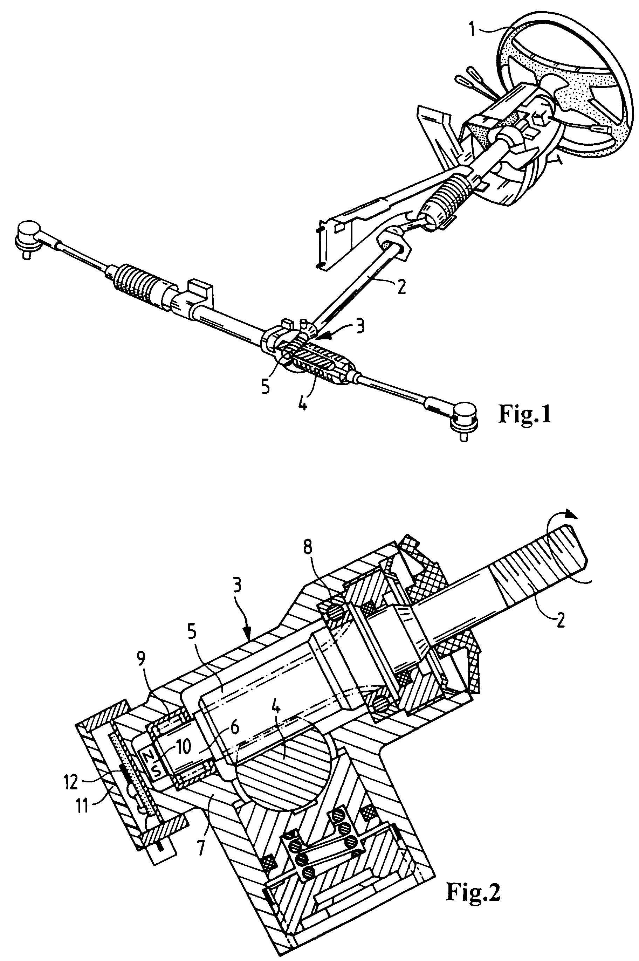

Die schematisierte Darstellung eines hier nur beispielhaft aufgeführten Lenkgetriebes nach Figur 1 zeigt ein Lenkrad 1, mittels dem eine Lenkspindel 2 drehbar ist. Am unteren Ende 3 der Lenkspindel 2 wird die Drehung in herkömmlich bekannter Weise mittels eines schrägverzahnten, auf eine Zahnstange 4 antreibendes Ritzel 5 in eine Linearbewegung umgesetzt. Die vom Fahrer des hier nicht dargestellten Fahrzeugs ausgeführten Lenkbewegungen verstellen somit über die Linearbewegung der Zahnstange 4 den Einschlag bzw. die Rollrichtung der Räder des Fahrzeugs.

Figur 2 zeigt das untere Ende 3 der Lenkspindel 2 als Schnitt im Detail, wobei auf die mechanische Funktion dieser Bewegungsübertragung durch Verzahnungen hier nicht eingegangen werden braucht, da es für das Verständnis der Erfindung nicht von Bedeutung ist. Ein Zapfen 6 der Lenkspindel 2 ist im Gehäuse 7 des Lenkgetriebes präzise gelagert. Hierbei werden die axialen Kräfte von einem Kugellager 8 aufgenommen, welches zusammen mit einem Rollen- oder Nadellager 9 auch die radiale Führung der Lenkspindel 2 übernimmt.

Der Zapfen 6 ragt hierbei kräfte- und berührungsfrei in einen kleinen Hohlraum des Gehäuses 7 hinein, wobei dieser Hohlraum so bemessen ist, dass am Zapfen 6 ein kleiner Dauermagnet 10 angebracht werden kann, dessen Magnetisierungsrichtung senkrecht zur Lenkspindelachse gerichtet ist. Das sich zur Wand des Gehäuses 7 ausdehnende magnetische Streufeld des fest auf dem Zapfen 6 angebrachten Dauermagneten 10 ändert so seine Richtung analog zur Drehung der Lenkspindel 2.

Da das Gehäuse 7 im allgemeinen aus Aluminium oder Druckguß besteht, kann sich das Streufeld ungehindert auch durch die Wand des Gehäuses 7 in ein außen aufgesetztes Sensorgehäuse 11 ausbreiten. Auch dieses Sensorgehäuse 11 besteht im allgemeinen aus Nichteisen-Material wie z.B. Kunststoff und beinhaltet den magnetfeldempfindlichen Sensor 12, der in seiner bevorzugten Ausführungsform aus Hallelementen aufgebaut ist. Weiterhin kann in diesem Sensorgehäuse 11 eine elektronische und insbesondere integrierte Schaltung zur Signalauswertung untergebracht werden, welche sogar mit den Hallelementen auf einem Sensorchip vereinigt sein kann.

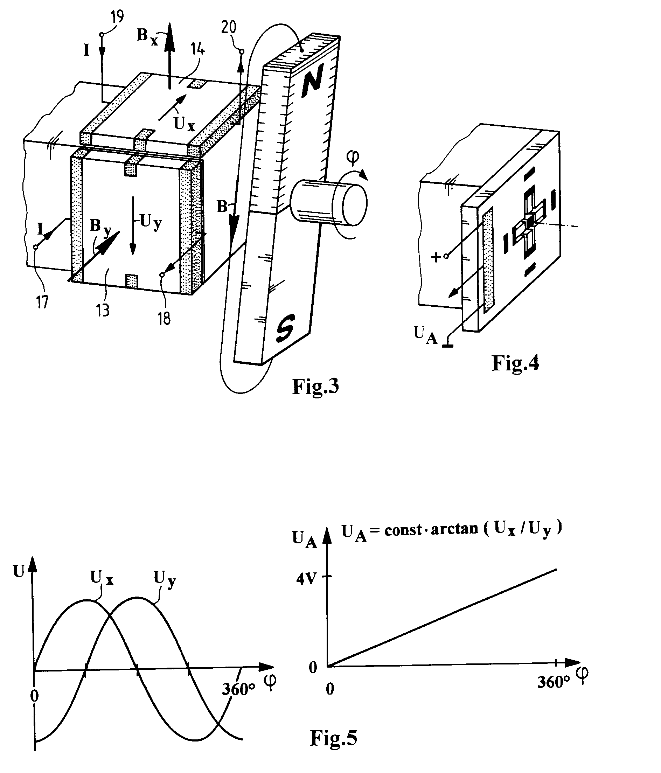

In Figur 3 und Figur 4 sind Ausführungsformen eines Lenkwinkelsensors mit Hallelementen 13 und 14 gezeigt. Die magnetischen Feldlinien B des Dauermagneten 10 (vgl. Fig. 2) verlaufen hierbei durch das Sensorgehäuse 11, wobei sich in diesem die Hallelemente 13 und 14 befinden, die gegeneinander um 90° versetzt sind. Die Darstellung der Hallelemente 13 und 14 ist hier nur schematisch, da diese auch gemäß der Figur 4 in eine Schicht aus Halbleitermaterial integriert sein können und dadurch sichtbar nicht mehr in Erscheinung treten müssen.

Die Richtungskomponenten der Feldlinien B verursachen hier spezifische Ausgangssignale der beiden Hallelemente 13 und 14, wodurch sowohl die absolute Drehlage als auch eine Änderung des Drehwinkels der Lenkspindel 2 um eine beliebige Winkeländerung ϕ mit einer elektronischen Schaltung ausgewertet werden kann.

In der Figur 3 ist die Lage und die Beschaltung der zwei Hallelemente 13 und 14 als Bestandteil des Lenkwinkelsensors gemäß Figur 2 in prinzipieller Weise räumlich dargestellt, wobei zur näheren funktionellen Erläuterung auf den eingangs genannten Stand der Technik DE 44 41 504 A1 Bezug genommen wird. Das Hallelement 13 weist Stromanschlüsse 17 und 18 und das Hallelement 14 weist Stromanschlüsse 19 und 20 auf, durch die jeweils ein Strom I in der gezeigten Richtung hindurch fließt. Quer zu der Stromflußrichtung des Stromes I sind Hallspannungen U_{y} und Uₓ an den Hallelementen 13 und 14 abnehmbar.

Die magnetischen Feldlinien B weisen nach der Darstellung in der Figur 3 hierbei jeweils Feldkomponenten B_{y} und Bₓ auf, die in der als Halleffekt bekannten Weise zu einer Ablenkung der Ladungsträger des Stromes I und zu Potentialunterschieden führen, die als Hallspannungen U_{y} und Uₓ ausgewertet werden können. Eine Änderung der Richtung der Feldlinien B durch eine Drehung der Lenkspindel 2 um den Winkel ϕ führt demgemäß zu einer unterschiedlichen Beeinflussung des Halleffekts in den Hallelementen 13 und 14; dies kann über die elektronische Auswertung der Hallspannungen in ein entsprechendes Ausgangssignal umgewandelt werden.

Im linken Teil der Figur 3 ist als alternatives Beispiel eine hier nicht näher erläuterte prinzipielle Lösung mit einem integrierten Chip mit Hallelementen nur schematisch gezeigt.

In Figur 5 ist der Verlauf der Hallspannungen U_{y} und Uₓ in Abhängigkeit vom Drehwinkel ϕ dargestellt. Der Verlauf der Hallspannung Uₓ in Abhängigkeit vom Drehwinkel ϕ erfolgt hierbei nach einem Sinusgesetz und der der Hallspannung U_{y} nach einem Cosinusgesetz. Durch eine, in einer elektronischen Auswerteschaltung herzustellende Verknüpfung der Hallspannungen Uₓ und U_{y} wird eine Ausgangsspannung U_{A} (vgl. rechtes Diagramm der Figur 5) oder eine äquivalente Größe analoger oder digitaler Art erzeugt, die in großer Näherung proportional zum Drehwinkel ϕ der Lenkspindel 2 ist oder zumindest linear mit diesem zusammenhängt.

## Patentansprüche

1. Lenkwinkelsensor zur Detektierung des Drehwinkels oder einer Drehwinkeländerungen des Lenkrades eines Kraftfahrzeugs, bei dem
- mittels eines elektromechanischen Bauteils ein vom Drehwinkel oder einer Drehwinkeländerung abhängiges elektrisches Signal erzeugbar ist, **dadurch gekennzeichnet, dass**
- am, dem Lenkrad (1) gegenüberliegenden Ende (3) einer Lenkspindel (2) ein Dauermagnet (10) angebracht ist, dessen Magnetisierungsachse senkrecht zur Achse der Lenkspindel (2) liegt und dass
- sich im Bereich des Dauermagneten (10) ein feststehender magnetfeldempfindlicher Sensor (12) befindet.

2. Lenkwinkelsensor nach Anspruch 1, **dadurch gekennzeichnet, dass**
- die Lenkspindel (2) am gegenüberliegenden Ende (3) des Lenkrades (1) im Bereich der Lagerung (9) mit einem Zapfen (6) in einen Hohlraum eines Gehäuses (7) hineinragt, in dem der Dauermagnet (10) auf diesem Zapfen (6) drehbar ist und dass sich der magnetfeldempfindliche Sensor (12) in diesem Hohlraum befindet.

3. Lenkwinkelsensor nach Anspruch 1, **dadurch gekennzeichnet, dass**
- die Lenkspindel (2) am gegenüberliegenden Ende (3) des Lenkrades (1) im Bereich der Lagerung (9) mit einem Zapfen (6) in einen Hohlraum eines Gehäuses (7) hineinragt, in dem der Dauermagnet (10) auf diesem Zapfen (6) drehbar ist und dass sich der magnetfeldempfindliche Sensor (12) in einem auf die Wand des Gehäuses (7) aufgesetzten Sensorgehäuse (11) befindet.

4. Lenkwinkelsensor nach Anspruch 2 oder 3, **dadurch gekennzeichnet, dass**
- das Gehäuse (7) für das Lenkgetriebe aus nichtmagnetischem Metall und das Sensorgehäuse (11) aus nichtmagnetischem Metall oder Kunststoff besteht.

5. Lenkwinkelsensor nach einem der vorhergehenden Ansprüche, **dadurch gekennzeichnet, dass**
- der magnetfeldempfindliche Sensor (12) ein Hallsensor ist, der aus diskret aufgebauten Hallelementen (13,14) mit einer nachgeschalteten Auswerteelektronik besteht.

6. Lenkwinkelsensor nach einem der vorhergehenden Ansprüche 1 bis 4, **dadurch gekennzeichnet, dass**
- der magnetfeldempfindliche Sensor (12) ein integrierter Schaltkreis (IC) ist, dessen Hallelemente Bestandteile einer integrierten elektronische Schaltung sind, die auch im gleichen Schaltkreis (IC) die Auswerteelektronik beinhaltet.

7. Lenkwinkelsensor nach Anspruch 6, **dadurch gekennzeichnet, dass**
- die Hallelemente Vertical Hall Devices oder Magnetotransistoren sind.

8. Lenkwinkelsensor nach einem der vorhergehenden Ansprüche, **dadurch gekennzeichnet, dass**
- das Sensorgehäuse (11) und das Gehäuse (7) Bestandteil eines Gehäuses für ein kompaktes Lenkgetriebemoduls sind.
